(19) Europäisches Patentamt / European Patent Office / Office européen des brevets

(11) **EP 4 167 613 A1**

(12) **EUROPEAN PATENT APPLICATION**
published in accordance with Art. 153(4) EPC

(43) Date of publication:
**19.04.2023 Bulletin 2023/16**

(21) Application number: **21822794.0**

(22) Date of filing: **27.05.2021**

(51) International Patent Classification (IPC):
$H04W\ 8/22^{(2009.01)}$ $\quad H04W\ 16/28^{(2009.01)}$
$H04W\ 24/10^{(2009.01)}$ $\quad H04J\ 99/00^{(2009.01)}$
$H04B\ 7/022^{(2017.01)}$ $\quad H04W\ 28/16^{(2009.01)}$
$H04W\ 84/12^{(2009.01)}$

(52) Cooperative Patent Classification (CPC):
**H04B 7/022; H04J 1/00; H04W 8/22; H04W 16/28;
H04W 24/10; H04W 28/16; H04W 84/12**

(86) International application number:
**PCT/JP2021/020123**

(87) International publication number:
**WO 2021/251153 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.06.2020 JP 2020101073**

(71) Applicant: **Sony Group Corporation
Minato-Ku, Tokyo, 108-0075 (JP)**

(72) Inventors:
• **TANAKA Ken**
 **Tokyo 108-0075 (JP)**
• **AIO Kosuke**
 **Tokyo 108-0075 (JP)**
• **TANAKA Yusuke**
 **Tokyo 108-0075 (JP)**

(74) Representative: **D Young & Co LLP
120 Holborn
London EC1N 2DY (GB)**

(54) **COMMUNICATION DEVICE**

(57)    The present technology relates to a communication apparatus capable of improving communication quality.

The communication apparatus includes a controller which performs control. The controller generates first information including information associated with eigenvectors or singular vectors of propagation path information with each of a plurality of other communication apparatuses operating in coordination with each other and information associated with a complex phase difference between the eigenvectors or between the singular vectors. The controller transmits the generated first information to another communication apparatus. The present technology can be applied to devices constituting a wireless LAN system, for example.

EP 4 167 613 A1

**(Cont. next page)**

# FIG. 3

AP1       AP2       STA

S11: Capabilities Exchange

S12: Joint Sounding Trigger

S13: Joint Sounding

S14: Feedback

S15: NOMA Parameter Calculation
S16: Precoding Calculation

S17: NOMA Announcement

Ack

S18: Precoding Calculation

S19: NCJT-NOMA Trigger

Ack

S20: NCJT NOMA

S21: Demodulation

Ack

**Description**

TECHNICAL FIELD

The present technology relates to a communication apparatus, and more particularly to a communication apparatus capable of improving communication quality.

BACKGROUND ART

With the spread of wireless local area network (LAN) systems in recent years, advancement in communication apparatuses and diversification in communication applications have progressed, and there is a demand for expansion of communication capacity to communication apparatuses. For example, Patent Document 1 discloses a technique regarding a wireless communication system using multiple-input and multipleoutput (MIMO).

As joint transmission (JT) by beamforming (BF) coordinated by a plurality of access points (AP), there is non-coherent joint transmission (NCJT) in which each access point independently performs BF to perform transmission. Generally, a plurality of access points that coordinate as described above is referred to as a multi AP.

CITATION LIST

PATENT DOCUMENT

Patent Document 1: International Publication No. 2016/158537

SUMMARY OF THE INVENTION

PROBLEMS TO BE SOLVED BY THE INVENTION

Incidentally, when non-orthogonal multiple access (NOMA) is implemented in a plurality of access points that implement NCJT, feedback information on propagation paths is required in advance from a reception terminal, but the amount of feedback information of the propagation paths increases, and an effective throughput may decrease and communication quality may decrease.

The present technology has been made in view of such a situation, and aims to enable improvement of communication quality.

SOLUTIONS TO PROBLEMS

A communication apparatus according to one aspect of the present technology includes a controller which performs control. The controller generates first information including information associated with eigenvectors or singular vectors of propagation path information with each of a plurality of another communication apparatuses operating in coordination with each other and information associated with a complex phase difference between the eigenvectors or between the singular vectors. The controller transmits the generated first information to another communication apparatus.

In the communication apparatus according to the aspect of the present technology, first information is generated including information associated with eigenvectors or singular vectors of propagation path information with each of a plurality of another communication apparatuses operating in coordination with each other and information associated with a complex phase difference between the eigenvectors or between the singular vectors. The generated first information is transmitted to another communication apparatus.

A communication apparatus according to one aspect of the present technology operates in coordination with one or a plurality of first another communication apparatuses. The communication apparatus includes a controller which performs control. The controller generates a parameter regarding control of transmitted signals of the first another communication apparatuses and the communication apparatus in coordinated transmission on the basis of first information notified of from a second another communication apparatus and including information associated with a complex phase difference between eigenvectors or between singular vectors of propagation path information with each of the first another communication apparatuses. The controller transmits information associated with the generated parameter to all the first another communication apparatuses.

The communication apparatus according to the aspect of the present technology operates in coordination with one or a plurality of first another communication apparatuses. In the communication apparatus, a parameter is generated regarding control of transmitted signals of the first another communication apparatuses and the communication apparatus in coordinated transmission on the basis of first information notified of from a second another communication apparatus and including information associated with a complex phase difference between eigenvectors or between singular vectors of propagation path information with each of the first another communication apparatuses. Information associated with the generated parameter is transmitted to all the first another communication apparatuses.

Note that the communication apparatus according to the aspects of the present technology may be an independent apparatus or an internal block constituting one apparatus.

BRIEF DESCRIPTION OF DRAWINGS

Fig. 1 is a diagram illustrating a configuration example of a wireless network system to which the present technology is applied.
Fig. 2 is a diagram illustrating a configuration example of an embodiment of a communication apparatus to which the present technology is applied.
Fig. 3 is a diagram illustrating a first example of an overall sequence of the present technology.
Fig. 4 is a diagram illustrating a configuration example of a frame notified of by Capabilities Exchange.
Fig. 5 is a diagram illustrating a configuration example of a frame notified of by Feedback.
Fig. 6 is a diagram illustrating a configuration example of a frame notified of by NOMA Announcement.
Fig. 7 is a diagram illustrating a configuration example of a frame notified of by NCJT-NOMA Trigger.
Fig. 8 is a diagram illustrating a configuration example of a data unit transmitted by NCJT NOMA.
Fig. 9 is a diagram illustrating a second example of the overall sequence of the present technology.
Fig. 10 is a diagram illustrating a third example of the overall sequence of the present technology.
Fig. 11 is a diagram illustrating a fourth example of the overall sequence of the present technology.

MODE FOR CARRYING OUT THE INVENTION

<1. Embodiment of Present Technology>

In a wireless local area network (LAN), an access point (AP) (or a base station (BS)) and a user terminal (station (STA) or user equipment (UE)) in one basic service set (BSS) autonomously acquire a transmission right in the BSS to perform communication.

In a case where a plurality of antennas is mounted on a transmission terminal, in transmission (multiple input multiple output (MIMO)) using the antennas simultaneously, formation of directivity in a desired direction (hereinafter referred to as beamforming (BF)) can be achieved by multiplying appropriate weights for transmission antennas and reception antennas. Therefore, not only high gain transmission to a desired destination terminal can be performed, but also simultaneous communication to a plurality of terminals can be performed, and system throughput in BSS can be improved.

By extending the above-described BF and implementing joint transmission (JT) through BF coordinated by a plurality of access points (multi AP) coordinating with each other, a peak rate can be further improved. There is a plurality of methods in JT, and among them is non-coherent joint transmission (NCJT) in which each access point constituting the multi AP independently performs BF to perform transmission. At this time, a reception terminal can receive a data stream from each access point by separation processing such as a zero forcing (ZF) method or a minimize maximum square error (MMSE) method.

NCJT has a relatively low requirement of frequency synchronization accuracy between access points among JT methods, and thus can be applied to a high-frequency band or a propagation path that fluctuates at a high speed. However, in a case where a correlation of propagation paths between the access points is high as viewed from a reception terminal serving as the destination of NCJT, reception gain is reduced in the separation processing of a linear operation such as the above-described ZF method or MMSE method, and communication quality may be extremely lowered.

In order to solve this problem, Document 1 below assumes the case of two access points, but it has been reported that by appropriately setting different complex phase rotation amounts and different amplitudes for respective transmitted signals between access points, the minimum inter-symbol distance of a received signal can be expanded, and characteristics can be improved. Essentially, it is a type of non-orthogonal multiple access (NOMA) on the premise of data stream separation of a nonlinear operation in the reception terminal.

Document 1: Rohit U. Nabar, Helmut Bolcskei, and Arogyaswami J. Paulraj, "Transmit Optimization for Spatila Multiplexing in th Presence of Spatial Fading Correlation", IEEE GLOBECOM Nov. 2001

However, in order to appropriately set the complex phase rotation amount and the amplitude of the transmitted signal from each access point as described above, it is necessary to acquire propagation path information between each access point and the reception terminal. However, if the complex phase difference of the channel of each access point is not known from the reception terminal, the complex phase rotation amount to be set in the transmitted signal between the access points described above cannot be obtained. Therefore, the complex phase difference of the channels of each access point needs to be known from the reception terminal.

Document 2 below refers to acquisition of propagation path information in JT, and specifically, proposes that a reception terminal estimate a propagation path by a multi AP simultaneously transmitting a known signal to the reception terminal and feed back an estimation result to the multi AP.

Document 2: Kosuke Aio, et al., "Consideration on Multi-AP Sounding", doc.: IEEE 802.11-19/1134r1 9th Aug. 2019

In Document 3 below, as estimated propagation path information to be fed back, there exists CSI Feedback for directly feeding back propagation path information, Non Compressed Feedback (or Non Compressed Beamforming Feedback) for feeding back singular vectors when the propagation path information is used as a channel matrix. Furthermore, there exists Compressed Feedback (or Compressed Beamforming Feedback) for feeding back a parameter necessary when represented by a Givens rotation on the assumption of linear operation by Givens rotation with respect to the singular vectors described above. In general, the information amount decreases in the following order: CSI Feedback, Non Compressed Feedback, and Compressed Feedback.

Document 3: IEEE 802.11-2016

Here, Compressed Feedback can also be regarded as a method of deforming the singular vectors so that a determined element is 1 and feeding back the remaining elements.

In the three types of feedback described above, the feedback amount decreases in the following order: CSI Feedback, Non Compressed Feedback, and Compressed Feedback. However, in a particular case where transmission is performed simultaneously with a plurality of STAs such as Multi User MIMO, the feedback amount increases, and thus feedback is allowed only with Compressed Feedback.

However, in Non Compressed Feedback and Compressed Feedback, singular values (physically, complex amplitude gain) for the singular vectors are not fed back as complex numbers, and thus it is not possible to estimate the complex phase difference of the channels of each access point. As such, in order to implement NOMA as indicated in Document 1 in NCJT, achievement is only possible in the feedback form of CSI Feedback, and thus there is a problem that the amount of feedback information increases and effective throughput decreases.

Therefore, the present technology presents a feedback method capable of implementing NOMA based on amplitude and complex phase control between access points even with a small amount of feedback information in a multi AP that implements NCJT.

According to the present technology, in a case where the multi AP implements NOMA in NCJT, it is possible to reduce the overhead of weight notification and achieve improvement in the effective rate by notifying of efficient weights within the multi AP, and thus it is possible to improve communication quality. Hereinafter, embodiments of the present technology will be described with reference to the accompanying drawings.

(System Configuration)

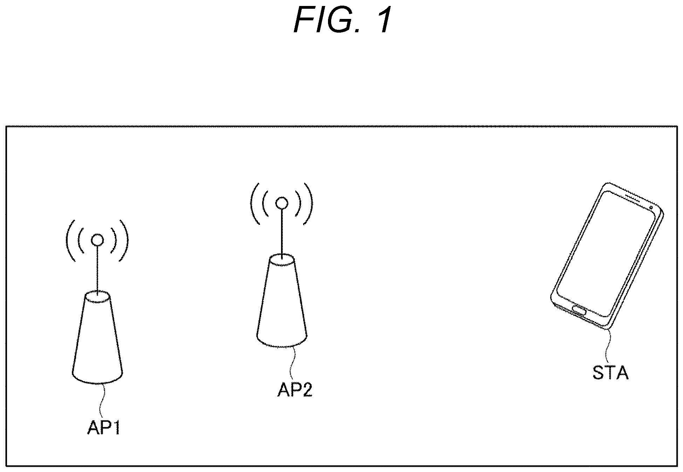

Fig. 1 illustrates a configuration example of a wireless LAN system as a wireless network system to which the present technology is applied.

In Fig. 1, a plurality of access points AP1 and AP2 (hereinafter also collectively referred to as a multi AP) and a communication terminal STA are connected to each other, and the multi AP is configured to implement joint transmission (JT) to the communication terminal STA.

In Fig. 1, two access points AP constituting a multi AP and one communication terminal STA are assumed. However, there may be two or more access points AP constituting the multi AP, and a plurality of communication terminals STA.

Among the access points AP constituting the multi AP, in a case where an access point AP that has acquired a transmission right prior to JT implementation is referred to as a sharing AP, and an access point AP that has not acquired a transmission right is referred to as a shared AP, the following roles may be performed.

That is, in a case where the sharing AP performs a coordinated operation with the shared AP as a multi AP, after acquiring a transmission right, the sharing AP notifies the shared AP that the coordinated operation is to be performed within a self-acquired transmission time.

Furthermore, in a case where JT is implemented, the sharing AP and the shared AP share data and notify of weight between the sharing AP and the shared AP. However, the sharing AP may share data with the shared AP and notify the shared AP of weight. Similarly, the shared AP may share data with the sharing AP and other shared APs, and notify them of weight.

Note that the frequency channels used in communication within the multi AP and communication between the multi AP and the communication terminal STA may be different. For example, communication may be performed in a 6 GHz band within the multi AP, and communication may be performed in a 2.4 GHz band and a 5 GHz band between the multi AP and the communication terminal STA.

Furthermore, communication within the multi AP may be implemented by wired communication such as an optical fiber or a power line. Moreover, when implementing JT, the access points AP may completely match the frequency channels used for transmission with the communication terminal STA, or may match only some of the frequency channels. For example, when two frequency channels of $B_1$ and $B_2$ are used between the access point AP1 and the communication terminal STA, and two frequency channels of $B_2$ and $B_3$ are used between the access point AP2 and the communication terminal STA, JT may be implemented only on the frequency channel of $B_2$.

(Apparatus Configuration)

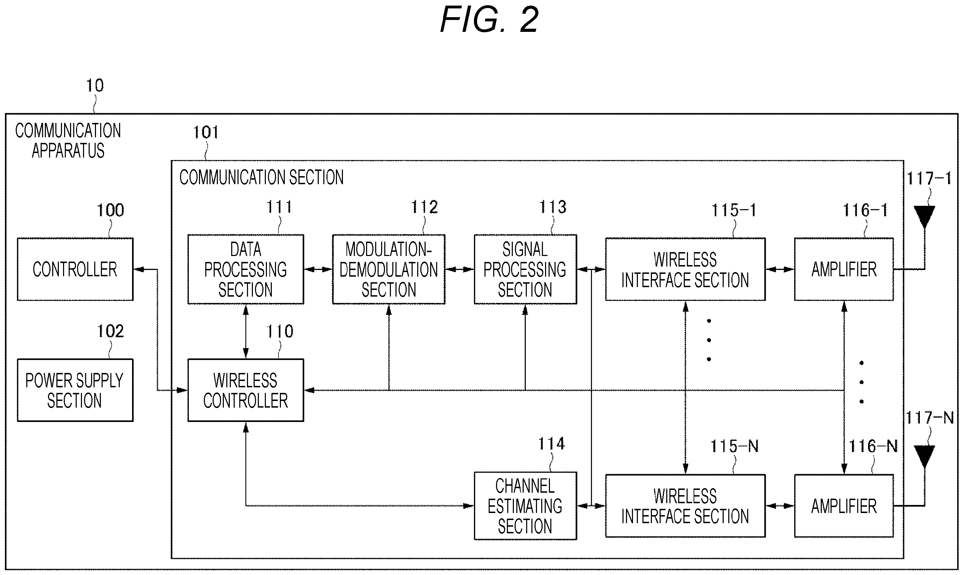

Fig. 2 illustrates a configuration example of an embodiment of a communication apparatus (wireless communication apparatus) to which the present technology is applied.

A communication apparatus 10 illustrated in Fig. 2 is configured as an access point AP or the communication terminal STA in the wireless network system of Fig. 1. That is, the basic configuration is similar between the access point AP and the communication terminal STA.

The communication apparatus 10 includes a controller 100, a communication section 101, and a power supply section 102. The communication section 101 includes a wireless controller 110, a data processing section 111, a modulation-demodulation section 112, a signal processing section 113, a channel estimating section 114, wireless interface sections 115-1 to 115-N, and amplifiers 116-1 to 116-N.

Furthermore, in the communication apparatus 10, antenna sections 117-1 to 117-N are provided for (the amplifiers 116-1 to 116-N of) the communication section 101. Here, N is an integer of 1 or more. A plurality of communication sections 101 may be provided. The communication section 101 may be achieved by LSI.

The controller 100 includes a microprocessor or the like, and controls operation of each section of the communication apparatus 10. The controller 100 controls the wireless controller 110 and the power supply section 102. Furthermore, the controller 100 may implement at least part of the operation of the wireless controller 110 instead of the wireless controller 110.

The wireless controller 110 exchanges information (data) between each section. Furthermore, the wireless controller 110 performs packet scheduling in the data processing section 111 and parameter setting in the modulation-demodulation section 112 and the signal processing section 113. Furthermore, the wireless controller 110 performs parameter setting and transmission power control in the wireless interface sections 115 and the amplifiers 116.

At the time of transmission when data is input from an upper layer, the data processing section 111 generates a packet for wireless communication from the input data, implements processing such as addition of a header for media access control (MAC) or addition of an error detection code, and supplies processing data obtained as a result to the modulation-demodulation section 112.

Furthermore, at the time of reception when data from the modulation-demodulation section 112 is input, the data processing section 111 implements processing such as MAC header analysis, packet error detection, and reorder processing on the input data, and outputs processing data obtained as a result to a protocol upper layer.

At the time of transmission, the modulation-demodulation section 112 implements processing such as encoding, interleaving, and modulation on the input data input from the data processing section 111 on the basis of the encoding system and the modulation method set by the wireless controller 110, and outputs a data symbol stream obtained as a result to the signal processing section 113.

Furthermore, at the time of reception, the modulation-demodulation section 112 implements processing such as demodulation, deinterleaving, and decoding on the data symbol stream input from the signal processing section 113 on the basis of processing opposite to that at the time of transmission, that is, the decoding method and the demodulation method set by the wireless controller 110, and outputs processing data obtained as a result to the data processing section 111.

At the time of transmission, the signal processing section 113 implements processing such as signal processing provided for spatial separation or BF as necessary on the data symbol stream input from the modulation-demodulation section 112, and outputs one or more transmitted symbol streams obtained as a result to each of the wireless interface sections 115-1 to 115-N.

Note that the signal processing section 113 may apply transmission (cyclic shift delay (CSD)) by applying an arbitrary delay amount to every antenna without performing spatial separation.

Furthermore, at the time of transmission, the signal processing section 113 implements processing such as signal processing for spatial separation of streams as necessary on the received symbol streams input from the wireless interface sections 115-1 to 115-N, and outputs the data symbol streams obtained as a result to the modulation-demodulation section 112.

The channel estimating section 114 calculates complex channel gain information on propagation paths from a preamble portion and a training signal portion among the input signals from the wireless interface sections 115-1 to 115-N. The complex channel gain information calculated by the channel estimating section 114 is used for demodulation processing in the modulation-demodulation section 112 via the wireless controller 110 and spatial processing in the signal processing section 113.

At the time of transmission, the wireless interface section 115-1 converts the transmitted symbol stream input from the signal processing section 113 into an analog signal, implements processing such as filtering, up-conversion to a carrier frequency, and phase control, and outputs (transmits) a transmitted signal obtained as a result to the amplifier 116-1.

Furthermore, at the time of reception, the wireless interface section 115-1 implements processing opposite to that at the time of transmission, that is, processing such as downconversion on the received signal input from the amplifier 116-1, and outputs a received symbol stream obtained as a result to the signal processing section 113. Furthermore, the wireless interface section 115-1 outputs the data obtained by the processing to the channel estimating section 114.

At the time of transmission, the amplifier 116-1 amplifies an analog signal that is a transmitted signal input from the wireless interface section 115-1 to a predetermined power, and transmits the signal to the antenna section 117-1. Furthermore, at the time of reception, the amplifier 116-1 amplifies an analog signal that is a received signal input from the antenna section 117-1 to a predetermined power, and outputs the signal to the wireless interface section 115-1.

Note that the wireless interface sections 115-2 to 115-N are configured similarly to the wireless interface section 115-1, the amplifiers 116-2 to 116-N are configured similarly to the amplifier 116-1, and the antenna sections 117-2 to 117-N are configured similarly to the antenna section 117-1, and thus description thereof is omitted here.

Here, in a case where it is not necessary to particularly distinguish the wireless interface sections 115-1 to 115-N, the wireless interface sections are referred to as a wireless interface section 115. In a case where it is not necessary to particularly distinguish the amplifiers 116-1 to 116-N, the amplifiers are referred to as an amplifier 116. In a case where it is not necessary to particularly distinguish the antenna sections 117-1 to 117-N, the antenna sections are referred to as an antenna section 117.

At this time, in the amplifier 116, (at least a part of) at least one of the function at the time of transmission and the function at the time of reception may be included in the wireless interface section 115. Furthermore, in the amplifier 116, (at least a part of) at least one of the function at the time of transmission and the function at the time of reception may be a constituent element external to the communication section 101. Moreover, one or more sets of the wireless interface section 115, the amplifier 116, and the antenna section 117 may be included as constituent elements.

The power supply section 102 includes a battery power supply or a fixed power supply, and supplies power to each section of the communication apparatus 10.

Note that, in the communication apparatus 10, a plurality of communication sections 101 may be mounted and connected to one controller 100. At this time, at least one of the plurality of communication sections 101 may be only used for communication with the access point AP. For example, in a case where communication occurs between the access points AP, the communication section 101 may be used as a dedicated communication section, and may be operated in a frequency channel different from the communication with the communication terminal STA.

(Overall Sequence)

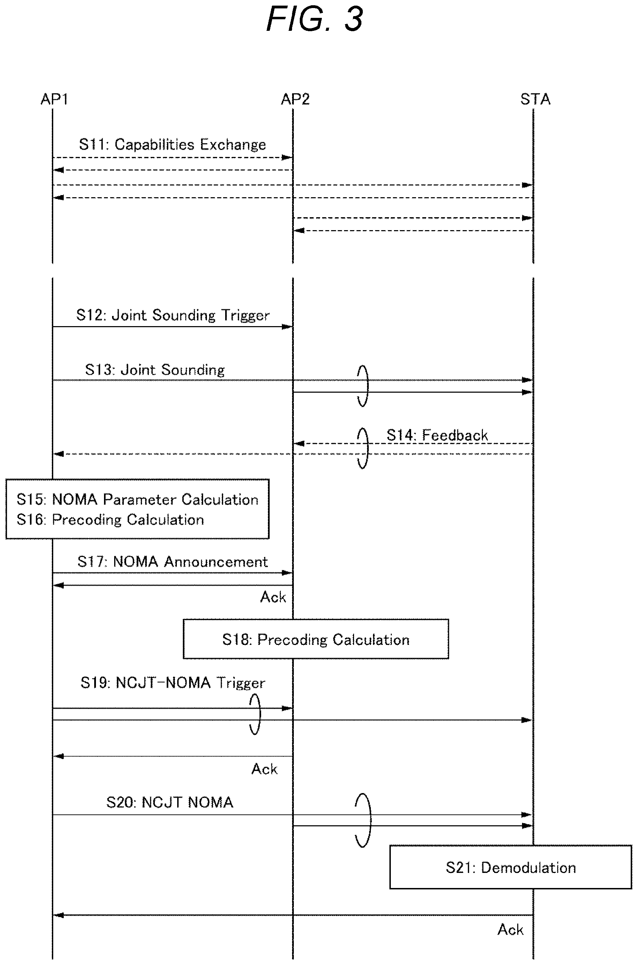

Fig. 3 illustrates a first example of an overall sequence of the present technology.

In Fig. 3, similarly to the wireless network system in Fig. 1, it is assumed that there are two access points AP of AP1 and AP2 constituting a multi AP, and there is one communication terminal STA. Note that in Fig. 3, each sequence is an example, and other sequences may be adopted such as those partially omitted as necessary.

(S11: Capabilities Exchange)

First, the access points AP1 and AP2 and the communication terminal STA mutually implement information notification (Capabilities Exchange) associated with the capability of their own terminals (S11). The capability referred to herein indicates whether or not a communication system such as JT or NOMA described later can be implemented or a frequency band that can be used for transmission by a terminal, but is not limited thereto.

Capability Exchange may be implemented by being included in, for example, a beacon signal periodically transmitted by each access point AP or an information notification (Association) for connecting the access points APs together to operate as a multi AP.

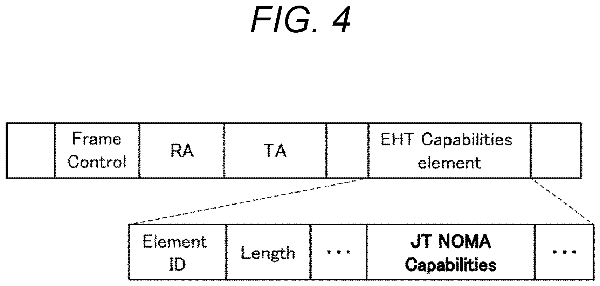

Fig. 4 illustrates a configuration example of a frame notified of by Capabilities Exchange.

This frame includes Frame Control, RA, TA, and Extremely High Throughput (EHT) Capabilities elements. However, the constituent elements of the frame are not limited thereto.

Frame Control includes information indicating that the frame is a frame notified of by Capabilities Exchange.

A receiver address (RA) and a transmitter address (TA) include information indicating a destination terminal and information indicating a transmission source terminal, respectively. For example, in RA and TA, a terminal-specific MAC address, identification information specific to the multi AP, or both of the foregoing may be indicated.

The EHT Capabilities element includes information associated with whether or not JT or NOMA can be implemented. At least one of the fields for Element ID, Length, and JT NOMA Capabilities is included in the EHT Capabilities element.

Element ID includes information indicating that the element is an EHT Capabilities element. Length includes information indicating a bit length of the EHT Capabilities element. However, Length may not be present in a case where the bit length of the EHT Capabilities element is known between terminals, such as when the bit length is a fixed length.

JT NOMA Capabilities includes information associated with whether or not JT and NOMA can be implemented in a terminal notifying of the frame. As a specific example, in a case where JT NOMA Capabilities is 2 bits long, information may be indicated as follows.

A case of two bits of "00" can indicate that neither Non Coherent Joint Transmission (NCJT) nor NOMA can be implemented. A case of two bits of "01" can indicate that NCJT can be implemented, but NOMA cannot be implemented. A case of two bits of "10" can indicate that NCJT cannot be implemented, but NOMA can be implemented. A case of two bits of "11" can indicate that NCJT and NOMA can be implemented.

Note that although Fig. 3 illustrates a case where Capabilities Exchange is implemented from the access point AP1, Capabilities Exchange may be implemented first from the access point AP2, and the order of communication in Capabilities Exchange is not limited.

(S12: Joint Sounding Trigger / S13: Joint Sounding)

After Capabilities Exchange has notified the access points AP1 and AP2 and the communication terminal STA that the multi AP can transmit NCJT NOMA and the communication terminal STA can receive NCJT NOMA, the multi AP implements transmission (Joint Sounding) of a reference signal for estimating propagation path information (CSI: Channel State Information) to the communication terminal STA prior to implementation of NCJT NOMA (S13) .

As the reference signal transmitted by Joint Sounding, a code or frequency allocation may be used such that the transmission antennas of all the access points AP constituting the multi AP are orthogonal to each other. As a result, in the communication terminal STA that receives Joint Sounding, it may be possible to estimate propagation path information for each of the transmission antennas of all the access points AP constituting the multi AP.

As illustrated in Fig. 3, prior to Joint Sounding, a notification (Joint Sounding Trigger) indicating that Joint Sounding is to be implemented from the access point AP1 to the access point AP2 may be implemented (S12).

Note that, although not illustrated in Fig. 3, immediately after Joint Sounding Trigger, a notification (Joint Sounding Announcement) of information associated with Joint Sounding may be implemented to the communication terminal STA that implements Joint Sounding.

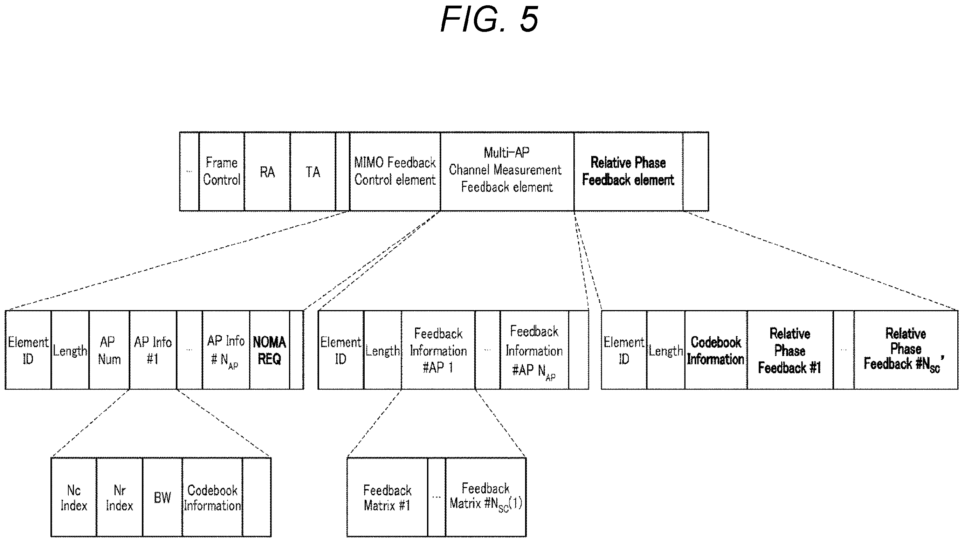

Joint Sounding Announcement may include information indicating that Joint Sounding is to be implemented immediately after Joint Sounding Announcement to a destination terminal that implements Joint Sounding. Furthermore, similarly, in Joint Sounding Announcement, when a terminal serving as a Joint Sounding destination in Feedback notifies the multi AP of an estimation result of the propagation path information, information requesting inclusion of a Relative Phase Feedback element in Fig. 5 as described later may be included in the frame to be notified of.

Furthermore, the access point AP2 serving as a reception target of Joint Sounding Trigger may implement frequency synchronization and time synchronization with the access point AP1 by a known sequence or a reference signal included in Joint Sounding Trigger.

The frame notified of by Joint Sounding Trigger includes information indicating that the frame itself is a frame notified of by Joint Sounding Trigger. Furthermore, the time for implementing Joint Sounding may include information explicitly indicated in the frame, or may be implicitly understood in advance between the multi AP and the communication terminal STA.

As an example in which the time for implementing Joint Sounding is implicitly understood between the multi AP and the communication terminal STA in advance, it may be understood within the multi AP in advance that Joint Sounding is to be implemented after a predetermined time has elapsed from reception of Joint Sounding Trigger. As another example, after Joint Sounding Trigger, the access point AP2 notifies the access point AP1 of information indicating a Joint Sounding Trigger reception response, and it may be understood in advance within the multi AP that Joint Sounding is to be implemented after a predetermined time has elapsed.

Note that Fig. 3 illustrates a case where Joint Sounding Trigger is implemented from the access point AP1, but it may be implemented from the access point AP2.

(S14: Feedback)

The communication terminal STA to which Joint Sounding is implemented from the multi AP estimates a propagation path for each combination of transmission antennas of the multi AP that has transmitted the reference signal and reception antennas of the communication terminal STA that has received the reference signal, on the basis of the reference signal received by Joint Sounding.

The communication terminal STA having estimated the propagation path information implements notification (Feedback) of the estimated propagation path information to the multi AP (S14) .

Fig. 5 illustrates a configuration example of a frame notified of by Feedback.

This frame includes Frame Control, RA, TA, an MIMO Feedback Control element, a Multi-AP Channel Measurement Feedback element, and a Relative Phase Feedback element. However, the constituent elements of the frame are not limited to these.

Frame Control includes information indicating that the frame is a frame notified of by Feedback.

RA and TA include information indicating a destination terminal and information indicating a transmission source terminal, respectively. For example, in RA and TA, a terminal-specific MAC address may be indicated, but in a case where the destination is a plurality of access points APs constituting a multi AP, identification information specific to the multi AP may be indicated.

The MIMO Feedback Control element includes information associated with a subsequent Multi-AP Channel Measurement Feedback element. The Multi-AP Channel Measurement Feedback element includes information associated with singular vectors of the propagation path information with the multi AP. The information associated with the singular vectors as used herein may be information indicating the singular vectors of the propagation path with the multi AP, or may be information for feeding back a parameter necessary when representing the singular vectors by a Givens rotation with respect to vectors obtained by applying the Givens rotation to the singular vectors. Furthermore, information indicating singular values of the singular vectors may be additionally included.

The Relative Phase Feedback element includes information associated with a relative phase difference between singular vectors with respect to the information associated with the singular vectors included in the Multi-AP Channel Measurement Feedback element.

The MIMO Feedback Control element includes fields for Element ID, Length, AP Num, AP Info #1 to #$N_{AP}$, and NOMA REQ.

Element ID includes information indicating that the element is an MIMO Feedback Control element. Length includes information indicating a bit length of the MIMO Feedback Control element.

AP Num includes information indicating the number of access points AP regarding the propagation path information in the frame. As a specific example, AP Num includes information indicating a number $N_{AP}$ of access points AP that have received the reference signal by Joint Sounding.

AP Info #1 to #$N_{AP}$ include information associated with respective Feedback Information #AP 1 to #AP $N_{AP}$ in the Multi-AP Channel Measurement Feedback element. However, $N_{AP}$ is assumed to represent any positive integer. Each piece of AP Info includes at least one of subfields for Nc Index, Nr Index, BW, and Codebook Information.

Nc Index and Nr Index include information indicating a matrix size (i.e., the number of rows and the number of columns) of a propagation path matrix indicated by Feedback Information in a subsequent Multi-AP Channel Measurement Feedback element.

BW includes information indicating a frequency of the propagation path information included in Feedback Information of the subsequent Multi-AP Channel Measurement Feedback element. As a specific example, BW includes information indicating a frequency of information indicated by each Feedback Matrix subfield in the Feedback Information #AP 1 to #AP $N_{AP}$ in each Multi-AP Channel Measurement Feedback element.

Codebook Information includes information indicating how many bits can be represented by a matrix element with respect to the propagation path matrix included in Feedback Information in the subsequent Multi-AP Channel Measurement Feedback element.

As a specific example, Nc Index, Nr Index, and Codebook Information include information respectively indicating the number of columns and the number of rows of a matrix including the above-described singular vectors, and how many bits express a complex number that is an element of the matrix.

NOMA REQ includes information indicating the presence or absence of a transmission request by NOMA in NCJT in the multi AP from the communication terminal STA that transmits the frame. At this time, in a case where NOMA REQ includes information indicating that there is no transmission request by NOMA, the Relative Phase Feedback element may not be present. As a specific example, NOMA REQ includes information indicating a transmission request by NOMA from the communication terminal STA.

The communication terminal STA may use correlation of propagation paths within the multi AP by Sounding as a determination criterion for requesting NOMA in NOMA REQ. For example, in a case where a certain correlation or more is observed with respect to the propagation path matrix between the communication terminal STA and each multi AP (i.e., in a case where it is determined that the correlation of the propagation paths exceeds a threshold defined by communication quality), information indicating a NOMA request may be included in NOMA REQ.

Furthermore, although not illustrated in Fig. 3, in a case where implementation of Feedback including a Relative Phase Feedback element is requested in Joint Sounding Announcement, information indicating an implementation request for NOMA is included in NOMA REQ, and Feedback may be implemented including the Relative Phase Feedback element.

Furthermore, the Multi-AP Channel Measurement Feedback element includes fields for Element ID, Length, and Feedback Information #AP 1 to #AP $N_{AP}$.

Element ID includes information indicating that the element is a Multi-AP Channel Measurement Feedback element. Length includes information indicating a bit length of the Multi-AP Channel Measurement Feedback element.

Feedback Information #AP 1 to #AP $N_{AP}$ include information indicating propagation path information of each access point AP estimated by the communication terminal STA through Joint Sounding.

Each Feedback Information field includes a subfield for Feedback Matrix. As a specific example, Feedback Matrix includes information associated with singular vectors of propagation path matrices with #AP 1 to #AP $N_{AP}$ estimated by the communication terminal STA through Joint Sounding.

Feedback Matrix includes information associated with the singular vectors with respect to the propagation path matrices at arbitrary frequencies and information associated with the quality of the propagation paths. Specifically, information may be stored according to a format defined by Compressed Beamforming Feedback in Document 3 (IEEE 802.11 -2016) described above.

Furthermore, the Relative Phase Feedback element includes at least one of fields for Element ID, Length, Codebook Information, and Relative Phase Feedback #1 to #$N_C$'.

Element ID includes information indicating that the element is a Relative Phase Feedback element. Length includes information indicating a bit length of the Relative Phase Feedback element. Codebook Information includes information indicating the resolution of the complex phase indicated by subsequent Relative Phase Information #1 to #$N_C$'.

Relative Phase Information #1 to #$N_C$' include information associated with a relative complex phase difference between singular values with respect to all singular vectors indicated by a plurality of different Feedback Matrices in a Multi-AP Channel Measurement Feedback element in a case where the Feedback Matrices are information associated with the same frequency.

As a specific example, for any positive integer m, when a Relative Phase Feedback #m subfield includes information at a k-th frequency, information indicated by $\Phi^{(k)}$ in the following formula (1) may be included. Note that in formula (1), arg(x) is a function representing an argument with respect to a complex number x.

[Formula 1]

$$\boldsymbol{\Phi}^{(k)} = \left[ \arg\left(\frac{\lambda_1^{(k,1)}}{\lambda_1^{(k,1)}}\right), \cdots, \arg\left(\frac{\lambda_{N(1)}^{(k,1)}}{\lambda_1^{(k,1)}}\right), \arg\left(\frac{\lambda_1^{(k,2)}}{\lambda_1^{(k,1)}}\right), \cdots, \arg\left(\frac{\lambda_{N(N_{AP})}^{(k,N_{AP})}}{\lambda_1^{(k,1)}}\right) \cdot \right] \quad \cdots \quad (1)$$

However, in formula (1), λ satisfies the relationship of the following formula (2).

[Formula 2]

$$\boldsymbol{S}_l^{(k)} = \left[ \boldsymbol{S}_l^{\widetilde{(k)}}, 0 \right] \cdots s.t. \cdots \boldsymbol{S}_l^{\widetilde{(k)}} = diag\left[ \lambda_1^{(k,l)}, \cdots, \lambda_{N(l)}^{(k,l)} \right], \boldsymbol{H}_l^{(k)} = \boldsymbol{U}_l^{(k)H} \boldsymbol{S}_l^{(k)} \cdot \boldsymbol{V}_l^{(k)} \cdot \quad \cdots \quad (2)$$

In formula (2), H((k);l) indicates a propagation path matrix between the communication terminal STA and an l-th access point AP at the k-th frequency.

Note that here, for convenience of description, when A(b;c) is shown, b represents a superscript for A, and c represents a subscript for A. For example, when H((k);l) is shown, it is meant that (k) is superscript for H and 1 is a subscript for H. These relationships are similarly applied to the following description.

Furthermore, in formula (2), U((k)H;l) and V((k);l) represent a left singular vector and a right singular vector when singular vector decomposition is implemented on a propagation path matrix H((k);l), diag [$a_1$, $a_2$, ..., $a_N$] represents a diagonal matrix having complex numbers $a_1$, $a_2$, ..., and $a_N$ as diagonal components, and N(l) represents U((k)H;l) and V((k);l) with a smaller number of rows.

Fig. 5 illustrates a case where the number of rows of V((k);l) is greater than the number of rows of U((k);l). At this time 0 is present, but 0 is not present in a case where the numbers of rows are equal.

(S15: NOMA Parameter Calculation / S16: Precoding Calculation)

The access point AP1 on which feedback has been implemented from the communication terminal STA implements NOMA Parameter Calculation to implement NOMA, and Precoding Calculation (S15 and S16).

In a case where NOMA REQ in the frame notified of by Feedback includes information requesting implementation of NOMA, NOMA Parameter Calculation may be implemented. In particular, in a case where BF can be implemented, such as a case where the access point AP1 has a plurality of transmission antennas, Precoding Calculation may be implemented.

Here, an example of a calculation procedure implemented by the access point AP1 will be illustrated below. First, Precoding Calculation is implemented on propagation path information indicated by a feedback matrix in a Multi-AP Channel Measurement Feedback element in a frame notified of by Feedback.

In a case where the format of the propagation path information to be notified of follows Compressed Feedback, information associated with the right singular vector of a propagation path matrix H and information associated with a singular value are notified of, but a vector obtained by multiplying the notified right singular vector by a complex constant may be calculated as Precoding.

Furthermore, as another method for calculating Precoding, in a case where a matrix expressed by the following formula (3) can be obtained, precoding may be obtained for this matrix by eigenvector decomposition, a minimize maximum square error (MMSE) method, or the like.

[Formula 3]

$$H^H H \quad \cdots \quad (3)$$

Note that even in a case where the propagation path matrix is notified of according to Compressed Feedback, formula (3) can be calculated by information associated with the right singular vector and the singular value. The calculation result of this precoding can also be referred to by Precoding Calculation (S18) described later.

Next, NOMA Parameter Calculation is implemented. As this calculation method, the algorithm mentioned in Document 1 described above may be used. In the subsequent NCJT NOMA, the magnitude of the amplitude and the complex phase rotation amount with respect to the transmitted symbol of each access point AP constituting the multi AP are calculated by NOMA Parameter Calculation.

Note that in order to determine the NOMA parameter, it is necessary to determine an upper limit of the number of streams to be transmitted to the communication terminal STA by each access point AP in a modulation and coding scheme (MCS) allocated to the communication terminal STA by each access point AP in NCJT NOMA. This may be determined by either NOMA Parameter Calculation (S15) or Precoding Calculation (S16).

Furthermore, in the above description, a case is described in which NOMA Parameter Calculation and Precoding Calculation are performed in this order. However, NOMA Parameter Calculation and Precoding Calculation may be performed in reverse order, or Precoding and NOMA Parameter Calculation may be performed jointly.

Note that in Fig. 3, NOMA Parameter Calculation (S15) is implemented in the access point AP1, but may be implemented in the access point AP2.

(S17: NOMA Announcement)

The access point AP1 which has implemented NOMA Parameter Calculation implements a notification (NOMA Announcement) of the NOMA parameter to be applied in NCJT NOMA in advance to the access point AP2 that transmits a signal to the shared communication terminal STA in NCJT NOMA (S17).

Note that in addition to the access point AP2, the access point AP1 may implement the communication terminal STA as a destination in NCJT NOMA.

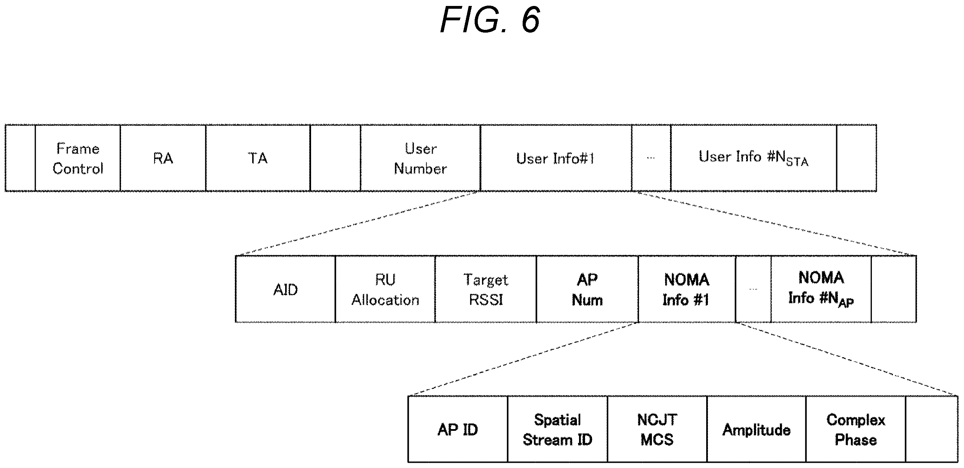

Fig. 6 illustrates a configuration example of a frame notified of by NOMA Announcement.

This frame includes Frame Control, RA, TA, User Number, and User Info. However, the constituent elements of the frame are not limited to these.

Frame Control includes information indicating that the frame is a frame notified of by NOMA Announcement.

RA and TA include information indicating a destination terminal and information indicating a transmission source terminal, respectively. For a specific example, in RA and TA, a terminal-specific MAC address may be indicated, but in a case where the destination is a plurality of access points APs, identification information specific to the multi AP may be indicated. User Number includes information indicating $N_{STA}$ as the number of subsequent User Info fields.

User Info #1 to User Info #$N_{STA}$ include information associated with a parameter used by each access point AP in NCJT NOMA for every communication terminal STA serving as a destination in NCJT NOMA. In a case where there is one communication terminal STA serving as a destination in NCJT NOMA, only one field is present for User Info. However, in a case where there is a plurality of communication terminals STA, a plurality of fields may be similarly present for User Info.

Each piece of User Info includes at least one of fields for AID, RU Allocation, Target RSSI, AP Num, and NOMA Info #1 to #NAP.

AID includes information for identifying the communication terminal STA. RU Allocation includes information indicating a frequency resource to be allocated to the communication terminal STA in NCJT NOMA.

Target RSSI includes information indicating target reception power of a signal received by the communication terminal STA in NCJT NOMA. AP Num includes information associated with the number of subsequent NOMA Info subfields.

NOMA Info #1 to #$N_{AP}$ include information associated with parameters used in NCJT NOMA for every access point AP. Each piece of NOMA Info includes at least one of subfields for AP ID, Spatial Stream ID, NCJT MCS, Amplitude, and Complex Phase.

AP ID includes information indicating an access point AP serving as a target of a parameter to which a subsequent subfield is applied. Spatial Stream ID includes, for every access point AP, information indicating an orthogonal sequence used by the communication terminal STA to perform channel estimation in NCJT NOMA.

NCJT MCS includes information indicating an encoding system (MCS) used by the access point AP in NCJT NOMA. Amplitude and Complex Phase include information indicating the NOMA parameter applied by the access point AP in NCJT NOMA.

As a specific example, Target RSSI includes information indicating a reference value of target reception power of a signal received by the communication terminal STA in NCJT NOMA, and includes information indicating a correction coefficient of amplitude to be applied to a transmitted signal for every access point AP on the basis of the reference value in Amplitude in NOMA Info. As such, in each access point AP notified by the frame, the transmission power in NCJT NOMA may be determined by Target RSSI and Amplitude in the corresponding NOMA Info.

The information indicated by each piece of NOMA Info may be information for every access point AP notified by the frame, or may be information for each of the access point AP1 notifying of the frame and the access point AP2 notified by the frame. Furthermore, Spatial Stream ID may be interpreted as the number of streams used by the access point AP to be notified in NCJT NOMA.

Furthermore, Amplitude may include a parameter regarding the amplitude of the transmitted signal, and Complex Phase may include a parameter regarding the complex phase rotation of the transmitted signal, and these pieces of information may be indicated for every frequency. For example, in NCJT NOMA, in a case where transmission is performed by an orthogonal frequency division multiplexing (OFDM) modulation scheme, information for all subcarriers may be included, but information for only some subcarriers may be included. In this case, information indicating which subcarrier information is included may be included in RU Allocation.

In a case where the access point AP1 has acquired a NOMA parameter to be applied in NCJT NOMA by implementing a NOMA Announcement to the access point AP2 that transmits a signal to the shared communication terminal STA in NCJT NOMA, the access point AP2 notifies the access point AP1 of a reception acknowledgement (Ack).

Ack represents notification of information indicating a reception result for the information notification implemented immediately prior. Here, the information notified of by Ack may be an Ack frame or a Block Ack frame defined in Document 3 described above. Note that an Ack notification may not be implemented.

Note that Fig. 3 illustrates a case where Joint Sounding Trigger (S12) and NOMA Announcement (S17) is implemented by the access point AP1, but some or all of this may be implemented by the access point AP2. For example, while Joint Sounding Trigger (S12) may be implemented from the access point AP2 to the access point AP1, NOMA Announcement (S17) may be implemented from the access point AP1 to the access point AP2.

(S18: Precoding Calculation)

The access point AP that has implemented NOMA Announcement calculates precoding (S18) used in NCJT NOMA according to the information notified of in NOMA Announcement.

Note that, as will be described later, in a case where NOMA Announcement (S17) is not implemented and a part of the information that can be notified of by NOMA Announcement is notified of by NCJT-NOMA Trigger (S19), Precoding Calculation (S18) may be implemented after implementing NCJT-NOMA Trigger.

The calculation procedure in Precoding Calculation (S18) may be similar to Precoding Calculation (S16), but in addition to this, the following calculation procedure may be performed on the basis of the information notified of by NOMA Announcement (S17).

That is, the following calculation procedure describes a case where precoding $W^{(m, nf)}$ for STA#m at a certain frequency f is calculated by AP#n through a calculation procedure similar to Precoding Calculation (S16), and AP#n calculates precoding $W'^{(m, nf)}$ to be applied to STA#m by NCJT NOMA on the basis of the precoding $W^{(m, nf)}$. However, f is within a range of frequency resources indicated in RU Allocation.

At this time, $W'^{(m, nf)}$ may be calculated from $W^{(m, nf)}$ as indicated in the following formula (4). Note that, here, for convenience of description, $W'^{(m, nf)}$ corresponds to $W^{(m, nf)}$ on the left side (a wavy line is written above W).

[Formula 4]

$$\widetilde{W}^{(m,nf)} = diag\left[\gamma_1 e^{j\varphi_1}, \cdots, \gamma_N e^{j\varphi_N}\right] \cdot C \cdot W^{(m,nf)} \quad \cdots \quad (4)$$

However, in formula (4), C represents a matrix that normalizes each column vector of $W^{(m, nf)}$, and $\gamma_1$, ..., $\gamma_N$ and $\varphi_1$, ..., $\varphi_N$ are information indicated in Amplitude and Complex Phase, respectively.

(S19: NCJT-NOMA Trigger)

The access point AP1 which has implemented NOMA Parameter Calculation (S15) notifies (NCJT-NOMA Trigger) the other access point AP2 of information inducing the implementation of NCJT NOMA prior to NCJT NOMA (S19).

Note that in addition to the previously described access point AP2, the communication terminal STA may be implemented as a destination in NCJT NOMA.

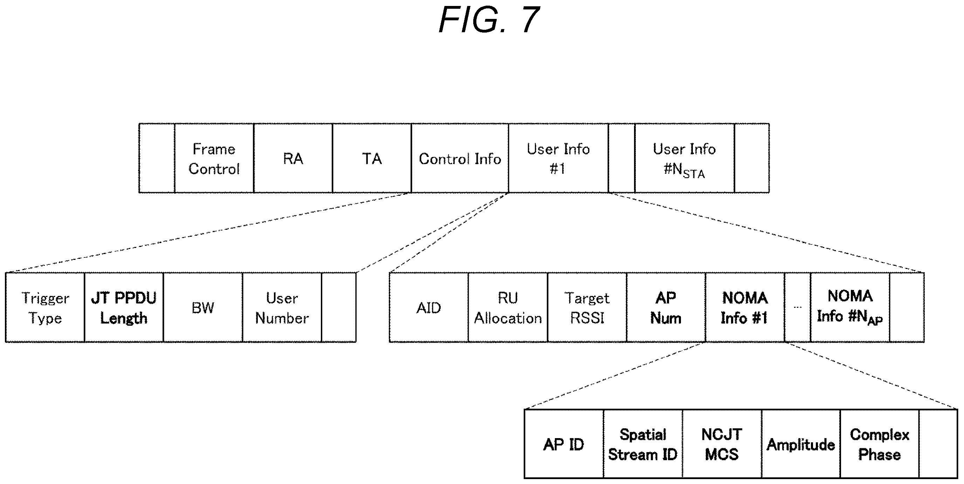

Fig. 7 illustrates a configuration example of a frame notified of by NCJT-NOMA Trigger.

This frame includes Frame Control, RA, TA, Control Info, and User Info. However, the constituent elements of the frame are not limited to these.

Frame Control includes information indicating that the frame is a frame notified of by NCJT-NOMA Trigger. RA and TA include information indicating a destination terminal and information indicating a transmission source terminal, respectively.

Control Info includes information associated with subsequent User Info fields and information associated with parameters commonly used by the access points AP in NCJT NOMA. Control Info includes at least one of subfields for Trigger Type, JT PPDU Length, BW, and User Number.

Trigger Type includes information indicating that the frame is a frame notified of by NCJT-NOMA Trigger in combination with the information included in Frame Control. Note that Frame Control may include information indicating that the frame is a frame to be notified of by NOMA-NCJT Trigger in combination with the information indicated by Trigger Type in Control Info.

JT PPDU Length includes information indicating a length of a PHY protocol data unit (PPDU) transmitted by each access point AP in NCJT NOMA.

BW includes information indicating a frequency band used in NCJT NOMA. However, BW may include information indicating a frequency resource to be allocated to each communication terminal STA in combination with RU Allocation in User Info. User Number includes information indicating the number of subsequent User Info fields.

User Info #1 to User Info #$N_{STA}$ include information associated with a parameter used by each each access point AP in NCJT NOMA for every communication terminal STA serving as a destination in NCJT NOMA. Each piece of User Info includes at least one of fields for AID, RU Allocation, Target RSSI, AP Num, and NOMA Info #1 to #$N_{AP}$.

That is, User Info of the frame notified of by NCJT-NOMA Trigger has a similar configuration to User Info of the frame notified of by NOMA Announcement illustrated in Fig. 6. However, in a case where NOMA Announcement is implemented, User Info may not be included in the frame.

Furthermore, in a case where User Info is not present, User Number may include information indicating that User Info is not present, or Trigger Type may include information indicating that User Info is not present. At this time, only the access point AP may be set as a destination in the frame.

The access point AP on which NCJT-NOMA Trigger is implemented generates a PPDU in NCJT NOMA to be a PPDU length indicated by JT PPDU Length in Control Info. At this time, when the amount of data transmitted by each access point AP is generated as a PPDU, in a case where the PPDU can be generated with a length less than the PPDU length indicated by JT PPDU Length, a PPDU having a predetermined PPDU length may be generated by adding zero information. That is, zero padding is performed by JT PPDU Length.

In a case where the access point AP1 has acquired information inducing implementation of NCJT NOMA by implementing NCJT-NOMA Trigger on the access point AP2 that transmits a signal to the shared communication terminal STA in NCJT NOMA, the access point AP2 notifies the access point AP1 of Ack. Here, the Ack notification method may be implemented by Ack or Block Ack frame defined in Document 1 described above. Note that an Ack notification may not be implemented.

(S20: NCJT NOMA)

The access point AP2 on which NCJT-NOMA Trigger has been implemented and the access point AP1 that has implemented NCJT-NOMA Trigger implement transmission by NOMA (NCJT NOMA) in NCJT (S20) .

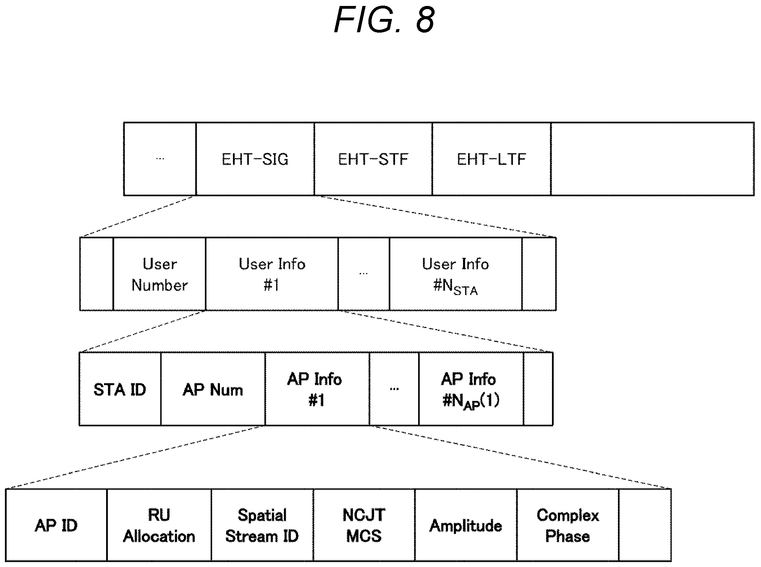

Fig. 8 illustrates a configuration example of a data unit transmitted by NCJT NOMA.

This data unit includes EHT-SIGNAL (SIG), EHT-Short Training Frame (STF), and EHT-Long Training Frame (LTF). However, the constituent elements of the data unit are not limited to these. For example, a synchronization signal and a channel estimation signal necessary for demodulating EHT-SIG may be inserted immediately before EHT-SIG.

EHT-SIG includes information necessary for demodulating subsequent EHT-STF and EHT-LTF. EHT-STF includes a known sequence for time synchronization and auto gain control (AGC) in the reception terminal. EHT-LTF includes a known sequence for performing channel estimation with each transmission antenna that transmits the frame in the reception terminal.

These fields may be transmitted by an orthogonal frequency domain multiplexing (OFDM) modulation scheme. In particular, EHT-STF may be a signal whose waveform is repeated at an arbitrary period, and EHT-LTF may be a signal according to different sequences orthogonal to each other among all transmission antennas in a plurality of access points AP that transmit the data unit.

EHT-SIG includes at least one of fields for User Number and User Info. User Number includes information indicating the number of subsequent User Info fields. User Info includes information for demodulating subsequent fields for a terminal serving as a destination of the frame.

Each piece of User Info includes at least one of fields for STA ID, AP Num, and AP Info. STA ID includes information for identifying a communication terminal STA indicating a target of information in User Info, but STA ID may not be present in a case where there is only one piece of User Info.

AP Num includes information indicating the number of subsequent AP Info fields. AP Info includes information associated with NOMA parameters applied by each access point AP in NCJT NOMA and frequency resource stream information. Note that different AP Info may indicate the above-described information for different access points AP.

Each piece of AP Info includes subfields for AP ID, RU Allocation, Spatial Stream ID, NCJT MCS, Amplitude, and Complex Phase.

AP ID includes information for identifying the access point AP. RU Allocation includes information indicating a frequency resource used by the access point AP in a subsequent signal. Spatial Stream ID includes information associated with a stream used by the access point AP in a subsequent signal.

NCJT MCS includes information indicating an encoding system used by the access point AP in a subsequent signal. Amplitude and Complex Phase include information associated with a NOMA parameter used by the access point AP in NCJT NOMA.

Note that the information indicated in NCJT MCS, Amplitude, and Complex Phase is not applied to EHT-STF and EHT-LTF, and may be parameters applied to the signal after EHT-LTF.

Furthermore, although not illustrated in the figure, information indicating that User Number and User Info are present in EHT-SIG may be included in EHT-SIG. This is because in a case where the information indicated by User Info is acquired by the communication terminal STA in advance through NOMA Announcement or NCJT-NOMA Trigger, User Info need not be included in the EHT-SIG, and thus it is not necessary to transmit a data unit without including User Info in the EHT-SIG.

Furthermore, the signals multiplexed in EHT-LTF may be transmitted so as to be separable by referring to the information indicated by RU Allocation and Spatial Stream ID.

Note that in order to implement NCJT NOMA (S20), each of the access point AP1 and the access point AP2 need to hold data to be transmitted to the communication terminal STA.

For example, in a case where only the access point AP1 is connected to a wide area network (WAN), data from the WAN to the communication terminal STA can be acquired by the access point AP1. In a case where this data is transmitted by NOMA NCJT, some of the data may be transmitted from the access point AP1 to the access point AP2 in advance.

The transmission means between the access points AP at this time may be wireless transmission or wired transmission such as optical fiber. Such sharing of data to the communication terminal STA among the access points AP is not explicitly illustrated in Fig. 3, but may be implemented at any timing, and may for example be implemented by JT Trigger.

(S21: Demodulation)

The communication terminal STA on which NCJT NOMA is implemented demodulates the signal from each access point AP by the notified information in EHT-SIG, and EHT-STF and EHT-LTF (S21) .

In this way, the access points AP1 and AP2 implement NCJT NOMA (S20), whereby Demodulation (S21) is implemented in the communication terminal STA and the access point AP1 is notified of Ack. Here, the Ack notification method may be implemented by Ack or Block Ack frame defined in Document 3 described above. Note that an Ack notification may not be implemented.

Note that, in the present technology, in EHT-SIG in NOMA Announcement, NCJT-NOMA Trigger, and NCJT NOMA, User Number and User Info are information to be notified of in common. However, as described above, these pieces of information are not necessarily included in each frame notification or data unit transmission.

However, in NCJT NOMA, since it is information necessary for the communication terminal STA to demodulate the signal from each access point AP, notification is necessary in at least one of frame notification and data unit transmission.

In the following description, a sequence example of possible patterns notified of by User Number and User Info will be illustrated. However, in the following sequence description, description of portions overlapping with the sequence of Fig. 3 will be omitted as appropriate due to repetition.

(Overall Sequence)

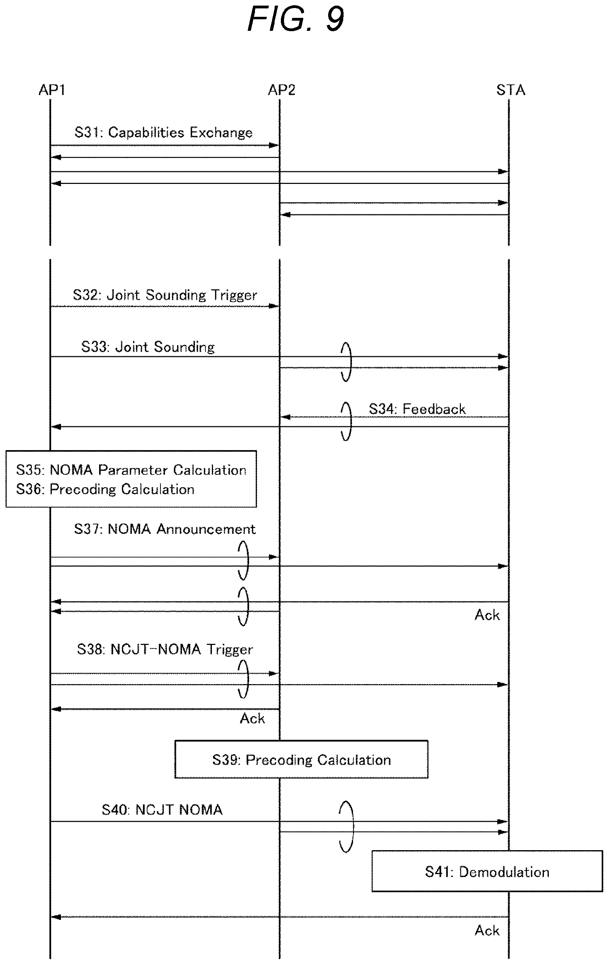

Fig. 9 illustrates a second example of the overall sequence of the present technology.

The sequence in Fig. 9 illustrates a case where User Number and User Info are notified of by NOMA Announcement as compared with the sequence in Fig. 3.

In Steps S31 to S36 of Fig. 9, Capabilities Exchange, Joint Sounding Trigger, Joint Sounding, Feedback, NOMA Parameter Calculation, and Precoding Calculation are implemented similarly to Steps S11 to S16 of Fig. 3.

In Fig. 9, when the access point AP1 implements NOMA Announcement, not only the access point AP2 but also the communication terminal STA is notified as a destination (S37). The access point AP2 and the communication terminal STA are notified of User Number and User Info by this NOMA Announcement.

Furthermore, immediately after NOMA Announcement, the access point AP1 is notified of Ack, which is a reception acknowledgement, from the access point AP2 and the communication terminal STA.

In Steps S38 to S41 of Fig. 9, NCJT-NOMA Trigger, Precoding Calculation, NCJT NOMA, and Demodulation are implemented similarly to Steps S18 to S21 of Fig. 3. However, in Steps S38 and S39, the order of NCJT-NOMA Trigger and Precoding Calculation is reversed as compared with Steps S18 and S19.

In Fig. 9, the communication terminal STA is included in the destination of NCJT-NOMA Trigger, but Ack may notify that NOMA Announcement has been received from the communication terminal STA without errors. At this time, User Number and User Info may not be included in the frame notified of by NCJT-NOMA Trigger, and the communication terminal STA may not be included in the destination of NCJT-NOMA Trigger. Further similarly, EHT-SIG in the data unit transmitted by NCJT NOMA may not include User Info.

Conversely, it is assumed that the communication terminal STA is notified of a reception failure of NOMA Announcement, or that Ack is not notified of. In these cases, the information of User Number and User Info may be included in the frame notified of by NCJT-NOMA Trigger, and NCJT-NOMA Trigger may be implemented with the access point AP2 and the communication terminal STA as destinations. At this time, since the communication terminal STA to be finally set as a destination by NCJT NOMA is notified by NCJT-NOMA Trigger, Precoding Calculation in the access point AP2 needs to be implemented after NCJT-NOMA Trigger.

(Overall Sequence)

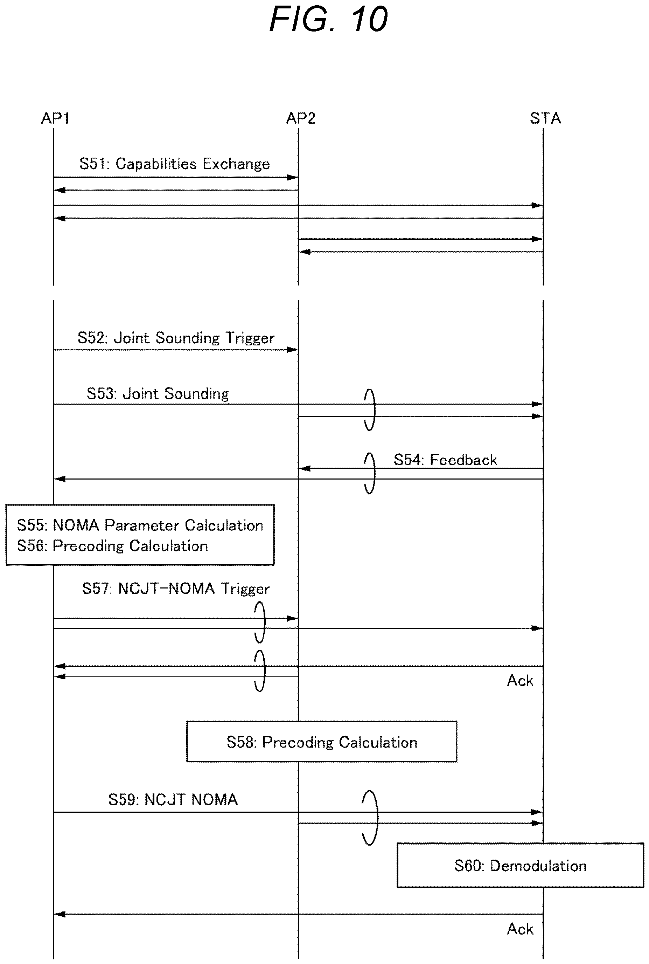

Fig. 10 illustrates a third example of the overall sequence of the present technology.

The sequence in Fig. 10 illustrates a case where User Number and User Info are notified of by NCJT-NOMA Trigger without implementing NOMA Announcement as compared with the sequence in Fig. 3.

In Steps S51 to S56 of Fig. 10, Capabilities Exchange, Joint Sounding Trigger, Joint Sounding, Feedback, NOMA Parameter Calculation, and Precoding Calculation are implemented similarly to Steps S11 to S16 of Fig. 3.

In Fig. 10, the access point AP1 implements NCJT-NOMA Trigger without implementing NOMA Announcement (S57). NCJT-NOMA Trigger notifies the access point AP2 and the communication terminal STA of User Number and User Info.

At this time, since the information notified of by NCJT-NOMA Trigger includes information notified of by NOMA Announcement, NOMA Announcement need not be implemented in Fig. 10. Furthermore, in this case, NCJT-NOMA Trigger needs to be implemented not only with the access point AP2 but also with the communication terminal STA as a destination. Then, the access point AP2 needs to implement Precoding Calculation (S58) according to the notified of information after NCJT-NOMA Trigger is implemented.

In Steps S58 to S60 of Fig. 10, Precoding Calculation, NCJT NOMA, and Demodulation are implemented similarly to Steps S18, S20 and S21 of Fig. 3.

(Overall Sequence)

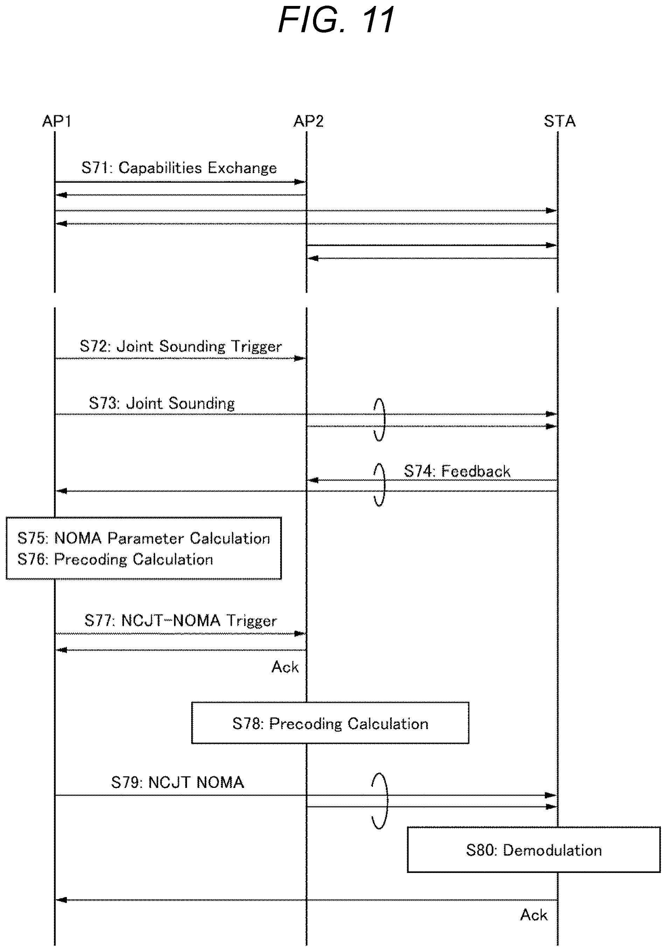

Fig. 11 illustrates a fourth example of the overall sequence of the present technology.

The sequence in Fig. 11 illustrates a case where User Number and User Info are notified of by NCJT-NOMA without implementing NOMA Announcement as compared with the sequence in Fig. 3.

In Steps S71 to S76 of Fig. 11, Capabilities Exchange, Joint Sounding Trigger, Joint Sounding, Feedback, NOMA Parameter Calculation, and Precoding Calculation are implemented similarly to Steps S11 to S16 of Fig. 3.

In Fig. 11, the access point AP1 implements NCJT-NOMA Trigger and NCJT-NOMA without implementing NOMA Announcement (S77, S79). NCJT-NOMA notifies the access point AP2 and the communication terminal STA of User Number and User Info.

At this time, since the information notified of by NCJT-NOMA includes information notified of by NOMA Announcement, NOMA Announcement need not be implemented in Fig. 11. Furthermore, in this case, when implementing NCJT, it is necessary to implement time synchronization, frequency synchronization, and synchronization of transmission timing within the multi AP, and thus it is necessary to implement NCJT-NOMA Trigger. At this time, NCJT-NOMA Trigger may be implemented without using the communication terminal STA as a destination.

In the communication apparatus 10 that implements the processing as described above, the following processing is implemented by at least one of the controller 100 and the wireless controller 110.

That is, in the communication apparatus 10 (e.g., the communication terminal STA), first information (e.g., the frame in Fig. 5) including information (e.g., the feedback matrix in Fig. 5) associated with eigenvectors or singular vectors of propagation path information with each of a plurality of other communication apparatuses 10 (e.g., access points AP1 and AP2) operating in coordination with each other and information (e.g., the relative phase feedback element in Fig. 5) associated with a complex phase difference between the eigenvectors or the singular vectors is generated, and the generated first information is transmitted to the other communication apparatuses 10.

Note that in the above description, an example using a singular vector has been described. However, since this singular vector is mathematically the same as or corresponds to an eigenvector, an eigenvector may be used instead of the singular vector.

In this communication apparatus 10 (e.g., the communication terminal STA), second information (e.g., BW and Codebook Information in AP Info #1 to #$N_{AP}$ in Fig. 5) associated with a frequency serving as a target of the first information and resolution representing the first information is generated, and the generated second information is transmitted to another communication apparatus 10. Furthermore, in this communication apparatus 10 (e.g., the communication terminal STA), third information (e.g., JT NOMA Capabilities in Fig. 4) indicating the generation of the first information is generated, and the generated third information is transmitted to the other communication apparatus 10.

In this communication apparatus 10 (e.g., the communication terminal STA), in a case where coordinated transmission is implemented on the other communication apparatus 10 by a plurality of other communication apparatuses 10, fourth information (e.g., NOMA REQ in Fig. 5) requesting implementation of the coordinated transmission by controlling the amplitude and the complex phase of the transmitted signal is generated, and the generated fourth information is transmitted to the other communication apparatus 10. At this time, it is determined whether or not the correlation of propagation paths between the plurality of other communication apparatuses 10 exceeds a threshold on the basis of reference signals from the other communication apparatuses 10. The threshold is defined by communication quality. In a case where it is determined that the correlation of the propagation paths exceeds the threshold, the fourth information can be generated.

Furthermore, in the communication apparatus 10 (e.g., the access point AP1) that operates in coordination with one or a plurality of first other communication apparatuses 10 (e.g., the access point AP2), on the basis of the first information (e.g., the frame in Fig. 5) notified of from a second other communication apparatus 10 (e.g., the communication terminal STA) and including information associated with a complex phase difference between eigenvectors or singular vectors of propagation path information with each of the first other communication apparatuses 10, a parameter (e.g., NOMA Info in User Info in Fig. 6 or 7) regarding control of the transmitted signal of the first other communication apparatuses 10 and the communication apparatus 10 in coordinated transmission is generated, and information associated with the generated parameter is transmitted to all the first other communication apparatuses 10.

In this communication apparatus 10 (e.g., the access point AP1), a parameter including fifth information (e.g., information in NOMA Info in Fig. 6) is generated for every second other communication apparatus 10 serving as a destination of the coordinated transmission, and information associated with the generated parameter is transmitted to at least one communication apparatus 10 of all the first other communication apparatuses 10 and second other communication apparatuses 10. The fifth information includes at least one of identifiers (e.g., AP ID in Fig. 6) of the first other communication apparatuses 10, a number (e.g., Spatial Stream ID in Fig. 6) of a stream in the coordinated transmission to the second other communication apparatus 10, an encoding system (e.g., NCJT MCS in Fig. 6) used for every first other communication apparatus 10, information (e.g., Amplitude in Fig. 6) associated with transmission power for every first other communication apparatus 10, and information (e.g., Complex Phase in Fig. 6) associated with a complex phase for controlling a transmitted signal of every first other communication apparatus 10.

In this communication apparatus 10 (e.g., the access point AP1), in addition to the above-described parameters, sixth information (e.g., Frame Control in Fig. 7 or User Info in Fig. 6 or 7) including information (e.g., Frame Control in Fig. 7) that induces implementation of the coordinated transmission is generated, and the generated sixth information is transmitted to all the first other communication apparatuses 10. Furthermore, in this communication apparatus 10 (e.g., the access point AP1), the coordinated transmission is implemented according to the parameter in a case where fourth information (e.g., NOMA REQ in Fig. 5) requesting implementation of coordinated transmission by controlling the amplitude and the complex phase of the transmitted signal has been notified of from the second other communication apparatus 10.

Since such processing is implemented between a plurality of communication apparatuses 10 (e.g., the access points AP1 and AP2 and the communication terminal STA), it is possible to implement NOMA based on amplitude/complex phase control between access points even with a smaller amount of propagation path feedback information, and thus it is possible to improve the communication quality by improving the effective rate (effective throughput).

<2. Variations>

Note that the series of processing of the communication apparatus 10 described above can be executed by hardware or can be executed by software. In a case where the series of processing is executed by software, a program constituting the software is installed in a computer of each apparatus.

Furthermore, the embodiments of the present technology are not limited to the above-described embodiments, and various modifications can be made within a scope not departing from the gist of the present technology.

Moreover, each step described in the above-described overall sequence can be executed by one apparatus or can be executed in a shared manner by a plurality of apparatuses. Moreover, in a case where a plurality of processes is included in one step, the processes included in the one step can be executed by one apparatus or can be executed in a shared manner by a plurality of apparatuses.

Note that in the present specification, a system means a set of a plurality of constituent elements (apparatuses, modules (parts), etc.), and it does not matter whether or not all the constituent elements are in the same housing. Therefore, a plurality of apparatuses housed in separate housings and connected via a network and one apparatus in which a plurality of modules is housed in one housing are both systems.

Furthermore, the effects described in the present specification are merely examples and are not limitations, and other effects may be achieved.

Furthermore, the present technology can have the following configurations.

(1) A communication apparatus including

a controller which performs control,
in which the controller generates first information including information associated with eigenvectors or singular vectors of propagation path information with each of a plurality of another communication apparatuses operating in coordination with each other and information associated with a complex phase difference between the eigenvectors or between the singular vectors, and
the controller transmits the generated first information to another communication apparatus.

(2) The communication apparatus according to (1) described above,

in which the controller
generates second information associated with a frequency serving as a target of the first information and a resolution representing the first information, and
transmits the generated second information to the another communication apparatus.

(3) The communication apparatus according to (1) or (2) described above,

in which the controller
generates third information indicating that the first information is generated, and
transmits the generated third information to the another communication apparatus.

(4) The communication apparatus according to any one of (1) to (3) described above,

in which the controller

generates, in a case where coordinated transmission is implemented on the another communication apparatus by a plurality of the another communication apparatuses, fourth information requesting implementation of coordinated transmission by controlling an amplitude and a complex phase of a transmitted signal, and transmits the generated fourth information to the another communication apparatus.

(5) The communication apparatus according to (4) described above,

in which the controller
determines whether or not a correlation of propagation paths between a plurality of the another communication apparatuses exceeds a threshold defined by communication quality on the basis of reference signals from a plurality of the another communication apparatuses, and
generates the fourth information in a case where it is determined that the correlation of the propagation paths exceeds the threshold.

(6) The communication apparatus according to (2) described above,
in which the first information and the second information are included in a first frame notified of in a first phase.
(7) The communication apparatus according to (3) described above,

in which the first information is included in a first frame notified of in a first phase, and
the third information is included in a second frame notified of in a second phase implemented temporally before the first phase.

(8) The communication apparatus according to (4) described above,
in which the first information and the fourth information are included in a first frame notified of in a first phase.
(9) The communication apparatus according to any one of (1) to (8) described above, further including
a communication section which transmits the first information to the another communication apparatus by wireless communication.
(10) The communication apparatus according to any one of (1) to (9) described above,

in which the another communication apparatus is an access point, and
the communication apparatus is configured as a communication terminal which performs wireless communication with a plurality of the access points.

(11) A communication apparatus which operates in coordination with one or a plurality of first another communication apparatuses, the communication apparatus including

a controller which performs control,
in which the controller generates a parameter regarding control of transmitted signals of the first another communication apparatuses and the communication apparatus in coordinated transmission on the basis of first information notified of from a second another communication apparatus and including information associated with a complex phase difference between eigenvectors or between singular vectors of propagation path information with each of the first another communication apparatuses, and
the controller transmits information associated with the generated parameter to all the first another communication apparatuses.

(12) The communication apparatus according to (11) described above,

in which the controller
generates the parameter including fifth information for every second another communication apparatus serving as a destination of the coordinated transmission, and
transmits information associated with the generated parameter to at least one of all the first another communication apparatuses and the second another communication apparatus, and
the fifth information includes at least one of identifiers of the first another communication apparatuses, a number of a stream in the coordinated transmission to the second another communication apparatus, an encoding system used for every of the first another communication apparatuses, information associated with transmission power of every of the first another communication apparatuses, and information associated with a complex phase for controlling a transmitted signal of every of the first another communication apparatuses.

(13) The communication apparatus according to (11) or (12) described above,

in which the controller
generates sixth information including information inducing implementation of the coordinated transmission in addition to the parameter, and
transmits the generated sixth information to all the first another communication apparatuses.

(14) The communication apparatus according to any one of (11) to (13) described above,
in which the controller implements coordinated transmission according to the parameter in a case where fourth information requesting implementation of coordinated transmission by controlling an amplitude and a complex phase of a transmitted signal has been notified of from the second another communication apparatus.
(15) The communication apparatus according to (12) described above,

in which the first information is included in a first frame notified of in a first phase, and
the fifth information is included in a second frame notified of in a second phase implemented temporally after the first phase.

(16) The communication apparatus according to (13) described above,

in which the first information is included in a first frame notified of in a first phase, and
the sixth information is included in a second frame notified of in a second phase implemented temporally after the first phase.

(17) The communication apparatus according to any one of (11) to (16) described above, further including
a communication section which transmits information associated with the parameter to the first another communication apparatuses by wireless communication.
(18) The communication apparatus according to any one of (11) to (17) described above,

in which the first another communication apparatuses are access points, and
the second another communication apparatus is a communication terminal, and
the communication apparatus is configured as an access point which implements coordinated transmission with one or a plurality of the access points.

REFERENCE SIGNS LIST

| | |
|---|---|
| 10 | Communication apparatus |
| 100 | Controller |
| 101 | Communication section |
| 102 | Power supply section |
| 110 | Wireless controller |
| 111 | Data processing section |
| 112 | Modulation-demodulation section |
| 113 | Signal processing section |
| 114 | Channel estimating section |
| 115, 115-1 to 115-N | Wireless interface section |
| 116, 116-1 to 116-N | Amplifier |
| 117, 117-1 to 117-N | Antenna section |

Claims

1. A communication apparatus comprising

a controller configured to perform control,
wherein the controller generates first information including information associated with eigenvectors or singular vectors of propagation path information with each of a plurality of another communication apparatuses operating in coordination with each other and information associated with a complex phase difference between the eigenvectors or between the singular vectors, and
the controller transmits the generated first information to the another communication apparatus.

2. The communication apparatus according to claim 1,

wherein the controller
generates second information associated with a frequency serving as a target of the first information and a resolution representing the first information, and
transmits the generated second information to the another communication apparatus.

3. The communication apparatus according to claim 1,

wherein the controller
generates third information indicating that the first information is generated, and
transmits the generated third information to the another communication apparatus.

4. The communication apparatus according to claim 1,

wherein the controller
generates, in a case where coordinated transmission is implemented on the another communication apparatus by a plurality of the another communication apparatuses, fourth information requesting implementation of coordinated transmission by controlling an amplitude and a complex phase of a transmitted signal, and
transmits the generated fourth information to the another communication apparatus.

5. The communication apparatus according to claim 4,

wherein the controller
determines whether or not a correlation of propagation paths between a plurality of the another communication apparatuses exceeds a threshold defined by communication quality on a basis of reference signals from a plurality of the another communication apparatuses, and
generates the fourth information in a case where it is determined that the correlation of the propagation paths exceeds the threshold.

6. The communication apparatus according to claim 2,
wherein the first information and the second information are included in a first frame notified of in a first phase.

7. The communication apparatus according to claim 3,

wherein the first information is included in a first frame notified of in a first phase, and
the third information is included in a second frame notified of in a second phase implemented temporally before the first phase.

8. The communication apparatus according to claim 4,
wherein the first information and the fourth information are included in a first frame notified of in a first phase.

9. The communication apparatus according to claim 1, further comprising
a communication section configured to transmit the first information to the another communication apparatus by wireless communication.

10. The communication apparatus according to claim 1,

wherein the another communication apparatus is an access point, and
the communication apparatus is configured as a communication terminal which performs wireless communication with a plurality of the access points.

11. A communication apparatus which operates in coordination with one or a plurality of first another communication apparatuses, the communication apparatus comprising

a controller configured to perform control,

wherein the controller generates a parameter regarding control of transmitted signals of the first another communication apparatuses and the communication apparatus in coordinated transmission on a basis of first information notified of from a second another communication apparatus and including information associated with a complex phase difference between eigenvectors or between singular vectors of propagation path information with each of the first another communication apparatuses, and

the controller transmits information associated with the generated parameter to all the first another communication apparatuses.

**12.** The communication apparatus according to claim 11,

wherein the controller
generates the parameter including fifth information for every second another communication apparatus serving as a destination of the coordinated transmission, and
transmits information associated with the generated parameter to at least one of all the first another communication apparatuses and the second another communication apparatus, and
the fifth information includes at least one of identifiers of the first another communication apparatuses, a number of a stream in the coordinated transmission to the second another communication apparatus, an encoding system used for every of the first another communication apparatuses, information associated with transmission power of every of the first another communication apparatuses, and information associated with a complex phase for controlling a transmitted signal of every of the first another communication apparatuses.

**13.** The communication apparatus according to claim 11,

wherein the controller
generates sixth information including information inducing implementation of the coordinated transmission in addition to the parameter, and
transmits the generated sixth information to all the first another communication apparatuses.

**14.** The communication apparatus according to claim 12,
wherein the controller implements coordinated transmission according to the parameter in a case where fourth information requesting implementation of coordinated transmission by controlling an amplitude and a complex phase of a transmitted signal has been notified of from the second another communication apparatus.

**15.** The communication apparatus according to claim 12,

wherein the first information is included in a first frame notified of in a first phase, and
the fifth information is included in a second frame notified of in a second phase implemented temporally after the first phase.

**16.** The communication apparatus according to claim 13,

wherein the first information is included in a first frame notified of in a first phase, and
the sixth information is included in a second frame notified of in a second phase implemented temporally after the first phase.

**17.** The communication apparatus according to claim 11, further comprising
a communication section configured to transmit information associated with the parameter to the first another communication apparatuses by wireless communication.

**18.** The communication apparatus according to claim 11,

wherein the first another communication apparatuses are access points, and
the second another communication apparatus is a communication terminal, and
the communication apparatus is configured as an access point which implements coordinated transmission with one or a plurality of the access points.

# FIG. 1

AP1

AP2

STA

# FIG. 2

COMMUNICATION APPARATUS — 10

COMMUNICATION SECTION — 101

CONTROLLER — 100

POWER SUPPLY SECTION — 102

DATA PROCESSING SECTION — 111

MODULATION-DEMODULATION SECTION — 112

SIGNAL PROCESSING SECTION — 113

WIRELESS INTERFACE SECTION — 115-1

AMPLIFIER — 116-1

117-1

WIRELESS CONTROLLER — 110

CHANNEL ESTIMATING SECTION — 114

WIRELESS INTERFACE SECTION — 115-N

AMPLIFIER — 116-N

117-N

EP 4 167 613 A1

# FIG. 3

AP1                                    AP2                                    STA

S11: Capabilities Exchange

S12: Joint Sounding Trigger

S13: Joint Sounding

S14: Feedback

S15: NOMA Parameter Calculation
S16: Precoding Calculation

S17: NOMA Announcement

Ack

S18: Precoding Calculation

S19: NCJT-NOMA Trigger

Ack

S20: NCJT NOMA

S21: Demodulation

Ack

24

# FIG. 4

| | Frame Control | RA | TA | | EHT Capabilities element | |
|---|---|---|---|---|---|---|

| | Element ID | Length | ... | JT NOMA Capabilities | ... |
|---|---|---|---|---|---|

## FIG. 5

| | Frame Control | RA | TA | | MIMO Feedback Control element | Multi-AP Channel Measurement Feedback element | **Relative Phase Feedback element** | |
|---|---|---|---|---|---|---|---|---|

| Element ID | Length | AP Num | AP Info #1 | ... | AP Info # $N_{AP}$ | **NOMA REQ** | |
|---|---|---|---|---|---|---|---|

| Element ID | Length | Feedback Information #AP 1 | ... | Feedback Information #AP $N_{AP}$ | |
|---|---|---|---|---|---|

| Element ID | Length | **Codebook Information** | **Relative Phase Feedback #1** | ... | **Relative Phase Feedback #$N_{SC}$'** |
|---|---|---|---|---|---|

| Nc Index | Nr Index | BW | Codebook Information | |
|---|---|---|---|---|

| Feedback Matrix #1 | ... | Feedback Matrix #$N_{SC}(1)$ | |
|---|---|---|---|

EP 4 167 613 A1

# FIG. 6

## FIG. 7

| Frame Control | RA | TA | Control Info | User Info #1 | User Info #N_STA | |

Control Info:

| Trigger Type | JT PPDU Length | BW | User Number |

User Info #1:

| AID | RU Allocation | Target RSSI | AP Num | NOMA Info #1 | ... | NOMA Info #N_AP |

NOMA Info #1:

| AP ID | Spatial Stream ID | NCJT MCS | Amplitude | Complex Phase |

## FIG. 8

EHT-SIG | EHT-STF | EHT-LTF | ...

User Number | User Info #1 | ... | User Info #$N_{STA}$

STA ID | AP Num | AP Info #1 | ... | AP Info #$N_{AP}(1)$

AP ID | RU Allocation | Spatial Stream ID | NCJT MCS | Amplitude | Complex Phase

## FIG. 9

# FIG. 10

# FIG. 11

| | | |
|---|---|---|
| **INTERNATIONAL SEARCH REPORT** | | International application No. |
| | | PCT/JP2021/020123 |

**A. CLASSIFICATION OF SUBJECT MATTER**

H04W 8/22(2009.01)i; H04W 16/28(2009.01)i; H04W 24/10(2009.01)i; H04J 99/00(2009.01)i; H04B 7/022(2017.01)i; H04W 28/16(2009.01)i; H04W 84/12(2009.01)i

FI: H04W24/10; H04W84/12; H04W28/16; H04W16/28 150; H04W8/22; H04J99/00 100; H04B7/022

According to International Patent Classification (IPC) or to both national classification and IPC

**B. FIELDS SEARCHED**

Minimum documentation searched (classification system followed by classification symbols)

H04W8/22; H04W16/28; H04W24/10; H04J99/00; H04B7/022; H04W28/16; H04W84/12

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-147103 A (NTT DOCOMO INC.) 02 August 2012 (2012-08-02) entire text, all drawings | 1–18 |
| A | US 2014/0133336 A1 (LG ELECTRONICS INC.) 15 May 2014 (2014-05-15) entire text, all drawings | 1–18 |
| A | US 2011/0019755 A1 (SAMSUNG ELECTRONICS CO., LTD.) 27 January 2011 (2011-01-27) entire text, all drawings | 1–18 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search | Date of mailing of the international search report |
| 20 July 2021 (20.07.2021) | 03 August 2021 (03.08.2021) |
| Name and mailing address of the ISA/ Japan Patent Office 3-4-3, Kasumigaseki, Chiyoda-ku, Tokyo 100-8915, Japan | Authorized officer Telephone No. |

Form PCT/ISA/210 (second sheet) (January 2015)

INTERNATIONAL SEARCH REPORT

Information on patent family members

International application No.

PCT/JP2021/020123

| Patent Documents referred in the Report | Publication Date | Patent Family | Publication Date |
|---|---|---|---|
| JP 2012-147103 A | 02 Aug. 2012 | US 2013/0294279 A1 entire text, all drawings WO 2012/093555 A1 EP 2663115 A1 CN 103299667 A | |
| US 2014/0133336 A1 | 15 May 2014 | WO 2013/002563 A2 entire text, all drawings EP 2728767 A2 CN 103650368 A | |
| US 2011/0019755 A1 | 27 Jan. 2011 | WO 2011/013946 A2 entire text, all drawings EP 2460286 A2 | |

Form PCT/ISA/210 (patent family annex) (January 2015)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016158537 A